# FASCICULE DE BREVET EUROPEEN

(11) **EP 3 086 437 B1**
(45) Date de publication et mention de la délivrance du brevet: **21.10.2020**
(21) Numéro de dépôt: 16165359.7
(22) Date de dépôt: 14.04.2016
(51) Int. Cl.: H02J 7/02, H02M 7/537, B60L 50/51, B60L 53/24, B60L 58/12, B60L 15/00

(54) **CHARGEUR DE BATTERIE, INSTALLATION ÉLECTRIQUE COMPORTANT UN TEL CHARGEUR DE BATTERIE ET VÉHICULE AUTOMOBILE COMPORTANT UNE TELLE INSTALLATION ÉLECTRIQUE**
BATTERIELADEGERÄT, ELEKTRISCHES SYSTEM MIT EINEM SOLCHEN BATTERIELADEGERÄT, ELEKTRISCHES FAHRZEUG MIT EINEM SOLCHEN SYSTEM
BATTERY CHARGER, ELECTRICAL SYSTEM INCLUDING SUCH A CHARGER, ELECTRIC VEHICLE INCLUDING SUCH A SYSTEM

(30) Priorité: 22.04.2015 FR 1553593
(43) Date de publication de la demande: 26.10.2016
(73) Titulaire: Valeo Siemens eAutomotive France SAS, 95800 Cergy (FR)
(72) Inventeur: DE SOUSA, Luis, WOKING, GU22 7PZ (GB); BOUCHEZ, Boris, 95800 CERGY (FR); CHAUVENET, Pierre-Alexandre, 95800 CERGY (FR)
(74) Mandataire: Argyma

(56) Documents cités:
- FR-A1- 2 961 964
- US-A1- 2014 042 807
- LACROIX S ET AL: "An integrated fast battery charger for Electric Vehicle", VEHICLE POWER AND PROPULSION CONFERENCE (VPPC), 2010 IEEE, IEEE, 30 septembre 2010 (2010-09-30), pages 1-6, XP031929199, DOI: 10.1109/VPPC.2010.5729063 ISBN: 978-1-4244-8220-7

## Description

### DOMAINE TECHNIQUE

La présente invention concerne le domaine de la charge d'une batterie électrique.

### ARRIÈRE-PLAN TECHNOLOGIQUE

La demande de brevet publiée sous le numéro FR 2 961 964 A1 décrit un chargeur de batterie, comportant :
- trois inductances comportant chacune deux extrémités,
- trois bornes d'entrée connectées à un point intermédiaire respectivement des trois inductances et destinées à être respectivement connectées à trois phases d'un réseau triphasé pour se voir respectivement appliquer trois tensions de phase,
- deux bornes de sortie entre lesquelles une batterie est destinée à être connectée pour recevoir un courant de charge,
- pour chacune des extrémités d'inductance, un bras de commutation comportant :
   - un premier interrupteur destiné à sélectivement connecter/déconnecter l'extrémité d'inductance à/de la première borne de sortie,
   - un deuxième interrupteurs destiné à sélectivement connecter/déconnecter l'extrémité d'inductance à/de la deuxième borne de sortie,
- un dispositif de commande des interrupteurs pour les faire passer dans des configurations successives.

Les documents "An integrated fast battery charger for Electric Vehicle", LACROIX S. ET AL, 2010 IEEE Vehicle Power and Propulsion Conference, 1-3 Sept. 2010, et US2014/042807 A1 divulguent des chargeurs de batteries avec une topologies similaires à celle du document FR 2961964 A1.

Dans cette publication, il est proposé que le dispositif de commande les interrupteurs de manière qu'exactement un nombre prédéterminé de premiers interrupteurs soient fermés en même temps. Dans le cas d'un chargeur de batterie à six bras de commutation, il est prévu que ce nombre prédéterminé soit égal à deux.

Le chargeur de batterie décrit dans cette publication permet de limiter les variations de la tension de mode commun, c'est-à-dire de la tension entre le point neutre du réseau électrique et la masse électrique de la batterie. Ainsi, le courant électrique généré par cette tension de mode commun peut être facilement filtré.

Cependant, la solution proposée dans cette publication nécessite d'utiliser une batterie présentant une tension de batterie très élevée, 73% plus élevée que lorsque toutes les configurations possibles d'interrupteurs sont utilisées.

L'invention a pour but de proposer un chargeur de batterie limitant les variations de la tension de mode commun, tout en ne nécessitant pas une tension de batterie trop élevée.

### RÉSUMÉ DE L'INVENTION

À cet effet, il est proposé un chargeur de batterie, comportant :
- trois inductances comportant chacune deux extrémités,
- trois bornes d'entrée connectées à un point intermédiaire respectivement des trois inductances et destinées à être respectivement connectées à trois phases d'un réseau triphasé pour se voir respectivement appliquer trois tensions de phase,
- deux bornes de sortie entre lesquelles une batterie est destinée à être connectée pour recevoir un courant de charge,
- pour chacune des extrémités d'inductance, un bras de commutation comportant :
   - un premier interrupteur destiné à sélectivement connecter/déconnecter l'extrémité d'inductance à/de la première borne de sortie,
   - un deuxième interrupteurs destiné à sélectivement connecter/déconnecter l'extrémité d'inductance à/de la deuxième borne de sortie,
- un dispositif de commande des interrupteurs pour les faire passer dans des configurations successives,
caractérisé en ce que le dispositif de commande est destiné à commander les interrupteurs de manière que, sur un certain intervalle de temps de charge, exactement trois premiers interrupteurs soient fermés en même temps dans au moins 90% des configurations successives.

Grâce à l'invention, les variations de la tension de mode commun sont limitées au moins sur l'intervalle de temps de charge précité. En outre, de manière surprenante, les inventeurs ont trouvé que le choix de fermer exactement trois premiers interrupteurs plutôt que deux dans les configurations successives commandées par le dispositif de commande, permettait l'utilisation d'une tension de batterie pas trop élevée.

De façon optionnelle, l'intervalle de temps de charge vaut au moins une période du réseau électrique.

De façon optionnelle également, les interrupteurs sont commandés de manière que, sur l'intervalle de temps de charge, exactement trois premiers interrupteurs soient fermés en même temps dans toutes les configurations successives.

De façon optionnelle également, le dispositif de commande est destiné à faire suivre chaque configuration d'interrupteurs dans laquelle les premiers interrupteurs de deux bras de commutation d'une même inductance sont l'un fermé l'autre ouvert, par une configuration d'interrupteurs dans laquelle ces premiers interrupteurs sont dans les états opposés, les autres premiers interrupteurs restant dans le même état dans les deux configurations.

De façon optionnelle également, chaque interrupteur comporte un transistor et une diode montés en parallèle l'un de l'autre, la diode étant montée en inverse du transistor.

Il est en outre proposé une installation électrique comportant :
- un chargeur de batterie selon l'invention,
- une batterie connectées aux bornes de sortie du chargeur de batterie,
- un moteur électrique comportant trois inductances et un rotor destiné à être entraîné en rotation par un champ magnétique généré par le moteur électrique,
- un onduleur connectant la batterie au moteur électrique, l'onduleur comportant six bras de commutation destinés à connecter respectivement les six extrémités des inductances du moteur électrique sélectivement à la première borne de sortie et à la deuxième borne de sortie.

De façon optionnelle, les inductances du moteur électrique et les inductances du chargeur de batterie sont les mêmes.

De façon optionnelle également, les bras de commutation de l'onduleur et du chargeur de batterie sont les mêmes.

De façon optionnelle également, l'installation électrique comporte en outre un convertisseur continu-continu entre l'onduleur et la batterie.

Il est en outre proposé un véhicule automobile comportant une installation électrique selon l'invention, le moteur électrique étant destiné à entraîner des roues du véhicule automobile

### DESCRIPTION DES FIGURES

La figure 1 est un schéma électrique d'une installation électrique mettant en œuvre l'invention et comportant en particulier un chargeur de batterie comportant des bras de commutation munis d'interrupteurs.
La figure 2 est un diagramme représentant un nuage de points correspondant aux configurations des interrupteurs.
La figure 3 est un diagramme fréquentiel d'une tension de mode commun dans l'état de la technique.
La figure 4 est un diagramme fréquentiel d'une tension de mode commun dans le cas de l'installation électrique de la figure 1.

### DESCRIPTION DÉTAILLÉE

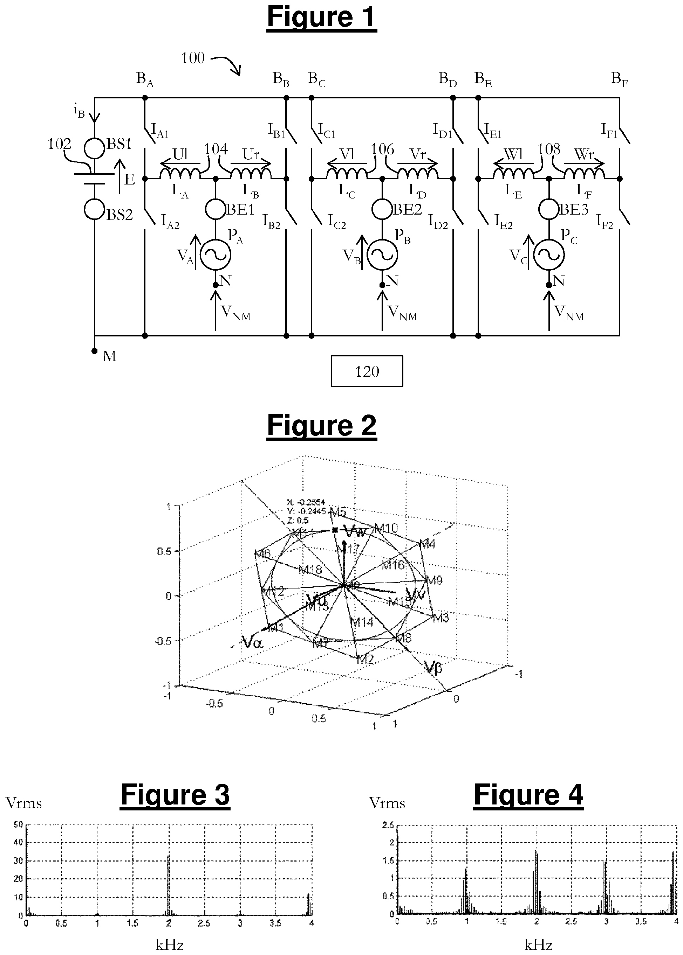

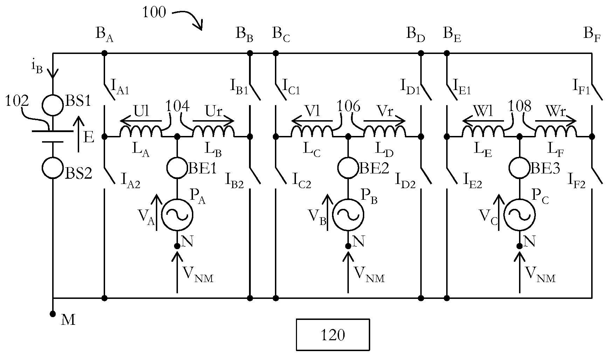

En référence à la figure 1, une installation électrique 100 mettant en œuvre l'invention va à présent être décrite.

Cette installation électrique 100 est par exemple destinée à être installée dans un véhicule automobile.

L'installation électrique 100 comporte tout d'abord une batterie 102 présentant une borne négative et une borne positive et fournissant, entre ces bornes, une tension E continue.

L'installation électrique 100 comporte en outre un moteur électrique comportant trois enroulements formant respectivement trois inductances 104, 106, 108. Les trois inductances 104, 106, 108 présentent chacune deux extrémités. Le moteur électrique est par exemple destiné à entraîner des roues du véhicule automobile.

L'installation électrique 100 comporte en outre un onduleur connectant la batterie 102 au moteur électrique.

Plus précisément, l'onduleur comporte deux bornes BS1, BS2 connectées dans l'exemple décrit respectivement à la borne positive et à la borne négative de la batterie 102. La borne négative de la batterie 102 forme une masse électrique M, généralement connectée à un châssis du véhicule automobile.

L'onduleur comporte en outre six bras de commutation B_{A}...B_{F} destinés à connecter respectivement les six extrémités d'inductance sélectivement à la borne BS1 et à la borne BS2.

Plus précisément, chaque bras de commutation B_{A}...B_{F} comporte des premier et deuxième interrupteurs I_{A1}...I_{F1}, I_{A2}...I_{F2} connectés l'un à l'autre en un point milieu. Ce point milieu est connecté à l'extrémité d'inductance associée au bras de commutation B_{A}...B_{F} considéré. Les premier et deuxième interrupteurs I_{A1}, I_{A2} ... I_{F1}, I_{F2} d'un même bras de commutation B_{A}...B_{F} sont en outre connectés respectivement à la borne BS1 et à la borne BS2. Ainsi, pour chaque bras de commutation B_{A}...B_{F}, le premier interrupteur I_{A1}...I_{F1} est destiné à sélectivement connecter/déconnecter l'extrémité d'inductance à/de la première borne de sortie BS1. Le deuxième interrupteur I_{A2}...I_{F2} est quant à lui destiné à sélectivement connecter/déconnecter l'extrémité d'inductance à/de la deuxième borne de sortie BS2.

Chaque interrupteur I_{A1}, I_{A2} ... I_{F1}, I_{F2} comporte par exemple un transistor et une diode (non représentés) montés en parallèle l'un de l'autre, la diode étant montée en inverse du transistor.

L'onduleur comporte en outre un dispositif de commande 120 des interrupteurs I_{A1}, I_{A2} ... I_{F1}, I_{F2}.

Lors de l'alimentation du moteur électrique par la batterie 102, suivant la commande du dispositif de commande 120, chaque inductance 104, 106, 108 peut se voir appliquer une tension nulle (les deux extrémités de l'inductance sont connectées à la même borne, négative ou positive, de la batterie 102), la tension +E ou la tension -E. Il est ainsi possible de faire varier les tensions moyennes appliquées aux inductances 104, 106, 108 générant alors un champ magnétique entraînant en rotation un rotor du moteur électrique.

L'installation électrique 100 comporte en outre un chargeur de batterie destiné à charger la batterie 102 à partir d'un réseau électrique triphasé comportant trois phases P_{A}, P_{B}, P_{C}. Les phases P_{A}, P_{B}, P_{C} délivrent respectivement des tensions de phase V_{A}, V_{B}, V_{C} sinusoïdales par rapport à un même point neutre N, les tensions de phase V_{A}, V_{B}, V_{C} étant décalées les unes des autres de 120°. Le chargeur de batterie est destiné à charger la batterie 102 en lui fournissant un courant de charge i_{B}.

Comme cela sera apparent par la suite, dans l'exemple décrit, le chargeur de batterie réutilise des éléments de l'onduleur et du moteur électrique.

Ainsi, le chargeur de batterie comporte tout d'abord les bornes BS1, BS2, qualifiées de « bornes de sortie » dans le cadre du chargeur de batterie. Comme indiqué plus haut, les bornes de sortie BS1, BS2 sont connectées dans l'exemple décrit respectivement à la borne positive et à la borne négative de la batterie 102 pour fournir le courant de charge i_{B} à la batterie 102.

Le chargeur de batterie comporte en outre trois bornes d'entrée BE1, BE2, BE3 destinées à être respectivement connectées aux trois phases P_{A}, P_{B}, P_{C} du réseau électrique pour se voir respectivement appliquer les tensions de phase V_{A}, V_{B}, V_{C}. La connexion se fait par exemple au moyen d'une connectique (non représentée) permettant le raccordement à une prise du réseau électrique 110.

Le chargeur de batterie comporte en outre les trois inductances 104, 106, 108. Les bornes d'entrée BE1, BE2, BE3 sont connectées à un point intermédiaire respectivement des trois inductances 104, 106, 108. Les portions des inductances 104, 106, 108 de chaque côté du point intermédiaire forment des demi-inductances L_{A} et L_{B}, L_{C} et L_{D}, L_{E} et L_{F}. De préférence, le point intermédiaire est un point milieu de l'inductance 104, 106, 108, de sorte que les demi-inductances L_{A} et L_{B}, L_{C} et L_{D}, L_{E} et L_{F} sont de valeurs sensiblement égales.

Le chargeur de batterie comporte en outre les six bras de commutation B_{A}...B_{F}.

Le chargeur de batterie comporte en outre le dispositif de commande 120.

Lors de la charge de la batterie 102, le dispositif de commande 120 est destiné à placer les interrupteurs I_{A1}, I_{A2}...I_{F1}, I_{F2} dans des configurations successives. De préférence, dans chacune de ces configurations successives, le premier interrupteur et le deuxième interrupteur d'un même bras de commutation sont dans des états opposés : l'un fermé, l'autre ouvert.

Par « configuration des interrupteurs », il faut comprendre une configuration stable, par opposition aux configurations transitoires résultant de légers décalages, parfois souhaités, entre l'ouverture et la fermeture des interrupteurs pour passer d'une configuration stable à une autre. En particulier, le dispositif de commande 120 est configuré pour ouvrir un interrupteur d'un bras de commutation légèrement avant la fermeture de l'autre interrupteur de ce bras de commutation. Ainsi, pendant un court instant transitoire, les deux interrupteurs du bras de commutation sont ouverts en même temps. Cela permet d'éviter que les deux interrupteurs soient fermés en même temps et donc que la batterie 102 soit mise en court-circuit. Généralement, les configurations stables des interrupteurs sont maintenues pendant au moins 2-3 µs, tandis que les configurations transitoires durent moins de 2-3 µs.

Chaque configuration des interrupteurs provoque l'apparition de tensions Ul, Ur, Vl, Vr, Wl, Wr aux bornes respectivement des demi-inductances L_{A}...L_{F}.

Comme expliqué en introduction, des variations de la tension V_{NM} (tension entre le point neutre N du réseau électrique 110 et la masse M de la batterie 102) peuvent provoquer des perturbations électromagnétiques en provoquant l'apparition d'un courant parasite de fréquence non nulle entre le point neutre N du réseau électrique 110 et la masse M de la batterie 102. Pour éviter cela, il est souhaitable de garder la tension V_{NM} la plus constante possible.

À cet effet, le dispositif de commande 120 est destiné à commander les interrupteurs I_{A1}, I_{A2}...I_{F1}, I_{F2} de manière que, sur un certain intervalle de temps de charge valant par exemple au moins une période du réseau électrique 110, exactement trois premiers interrupteurs I_{A1}...I_{F1} soient fermés en même temps dans au moins 90% des configurations successives des interrupteurs, de préférence dans toutes les configurations successives des interrupteurs. Bien sûr l'intervalle de temps de charge précédent peut s'étendre sur toute la durée de la charge de la batterie 102.

Avec une telle commande des interrupteurs, la tension V_{NM} reste sensiblement constante sur l'intervalle de temps de charge considéré.

De préférence, le dispositif de commande 120 est destiné à faire se suivre des paires de configurations, dites complémentaires. Le dispositif de commande 120 est ainsi destiné à faire suivre chaque configuration d'interrupteurs dans laquelle les premiers interrupteurs de deux bras de commutation d'une même inductance 104, 106, 108 sont l'un fermé l'autre ouvert, par une configuration d'interrupteurs dans laquelle ces premiers interrupteurs sont dans les états opposés, les autres premiers interrupteurs restant dans le même état dans les deux configurations de la paire. De préférence, les deux configurations de la paire sont maintenues pendant des durées sensiblement égales.

En appairant ainsi les configurations, les deux demi-inductances L_{A} et L_{B,} L_{C} et L_{D}, L_{E} et L_{F} de chaque inductance 104, 106, 108 sont sollicitées de manière sensiblement égale. En particulier, elles présentent des tensions moyennes <Ul> et <Ur>, <Vl> et <Vr>, <Wl> et <Wr> sensiblement égales sur la durée de la paire de configurations complémentaires.

De manière surprenante, le choix de trois premiers interrupteurs fermés ne nécessite pas une tension de batterie E beaucoup plus élevée qu'en utilisant toutes les configurations possibles d'interrupteurs. Cet avantage va être expliqué à présent.

Avec l'appairage de configurations complémentaires décrit précédemment, il est possible d'associer à chaque configuration d'interrupteur un point dans un espace en trois dimension U, V, W, en définissant les tensions :
U = (Ul + Ur)/2
V = (Vl + Vr)/2
W = (Wl + Wr)/2

Les configurations possibles avec exactement trois premiers interrupteurs fermés sont listées dans le tableau suivant, qui indique l'état des premier interrupteurs (la valeur « 0 » représente l'état ouvert et la valeur « 1 » représente l'état fermé), ainsi que le point correspondant dans l'espace U, V, W :

| N° | I_{A1} | I_{B1} | I_{C1} | I_{D1} | I_{E1} | I_{F1} | Point de configuration |
|---|---|---|---|---|---|---|---|
| 1 | 0 | 1 | 0 | 1 | 0 | 1 | M0 |
| 2 | 1 | 0 | 1 | 0 | 1 | 0 | M0 |
| 3 | 0 | 1 | 0 | 1 | 1 | 0 | M0 |
| 4 | 1 | 0 | 1 | 0 | 0 | 1 | M0 |
| 5 | 0 | 1 | 1 | 0 | 0 | 1 | M0 |
| 6 | 1 | 0 | 0 | 1 | 1 | 0 | M0 |
| 7 | 0 | 1 | 1 | 0 | 1 | 0 | M0 |
| 8 | 1 | 0 | 0 | 1 | 0 | 1 | M0 |
| 9 | 1 | 1 | 0 | 1 | 0 | 0 | M7 |
| 10 | 1 | 1 | 1 | 0 | 0 | 0 | M7 |
| 11 | 0 | 1 | 1 | 1 | 0 | 0 | M8 |
| 12 | 1 | 0 | 1 | 1 | 0 | 0 | M8 |
| 13 | 0 | 0 | 1 | 1 | 0 | 1 | M9 |
| 14 | 0 | 0 | 1 | 1 | 1 | 0 | M9 |
| 15 | 0 | 0 | 0 | 1 | 1 | 1 | M10 |
| 16 | 0 | 0 | 1 | 0 | 1 | 1 | M10 |
| 17 | 0 | 1 | 0 | 0 | 1 | 1 | M11 |
| 18 | 1 | 0 | 0 | 0 | 1 | 1 | M11 |
| 19 | 1 | 1 | 0 | 0 | 0 | 1 | M12 |
| 20 | 1 | 1 | 0 | 0 | 1 | 0 | M12 |

Ces points sont représentés sur la figure 2, avec en outre les points M1...M6 et M13...M19 obtenus avec les autres configurations d'interrupteurs. Sur la figure 2 les valeurs U, V, W de chaque point sont normalisées en les divisant par la tension de batterie E. L'utilisation de ces points permet de générer, dans un plan défini par des axes Vα, Vβ, un cercle représentant un champ tournant. Pour charger la batterie 102, le champ tournant généré par les points utilisés doit être au moins aussi grand que le champ tournant généré par le réseau électrique, c'est-à-dire par les tensions V_{A}, V_{B}, V_{C}.

Comme cela est visible sur la figure 2, c'est en utilisant les points M1, M2, M3, M4, M5 et M6 qu'il est possible de générer le cercle le plus grand possible (non représenté sur la figure 2), c'est-à-dire le cercle contenu dans l'hexagone défini par ces points.

En utilisant les points M7, M8, M9, M10, Mil et M12, il est possible de générer le cercle représenté sur la figure 2, qui est plus petit que le cercle le plus grand possible.

Ainsi, pour compenser l'utilisation du cercle plus petit, il est nécessaire d'utiliser une tension de batterie E plus grande. Après calcul, il apparait que cette augmentation de la tension de batterie E n'est que de 15,5%.

Ainsi, en se plaçant dans le cas du réseau électrique européen qui présente une tension de 230 Vrms, la tension de batterie E minimale pour pouvoir être chargée en utilisant les configurations d'interrupteurs avec exactement trois premiers interrupteurs fermés est d'environ 651 V, contre 563 V si toutes les configurations possibles d'interrupteurs étaient utilisées.

Le spectre fréquentiel de la tension V_{NM} est représenté sur la figure 3 lorsque toutes les configurations possibles d'interrupteurs sont utilisées, et sur la figure 4 lorsque seules les configurations d'interrupteurs avec exactement trois premiers interrupteurs fermés sont utilisées. Il apparait clairement que l'amplitude des pics de fréquence est beaucoup plus faible dans le deuxième cas, ce qui permet un filtrage plus facile du courant parasite résultant de la tension V_{NM}.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, l'installation électrique pourrait comporter un convertisseur continu-continu entre l'onduleur et la batterie.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Chargeur de batterie, comportant :
- trois inductances (104, 106, 108) comportant chacune deux extrémités,
- trois bornes d'entrée (BE1, BE2, BE3) connectées à un point intermédiaire respectivement des trois inductances (104, 106, 108) et destinées à être respectivement connectées à trois phases (P_{A}, P_{B}, P_{C}) d'un réseau triphasé pour se voir respectivement appliquer trois tensions de phase (V_{A}, V_{B}, V_{C}),
- deux bornes de sortie (BS1, BS2) entre lesquelles une batterie (102) est destinée à être connectée pour recevoir un courant de charge (i_{B}),
- pour chacune des extrémités d'inductance, un bras de commutation (B_{A}...B_{F}) comportant :
- un premier interrupteur (I_{A1}...I_{F1}) destiné à sélectivement connecter/déconnecter l'extrémité d'inductance à/de la première borne de sortie (BS1),
- un deuxième interrupteurs (I_{A2}...I_{F2}) destiné à sélectivement connecter/déconnecter l'extrémité d'inductance à/de la deuxième borne de sortie (BS2),
- un dispositif de commande (120) des interrupteurs (I_{A1}, I_{A2}...I_{F1}, I_{F2}) pour les faire passer dans des configurations successives,
**caractérisé en ce que** le dispositif de commande (120) est destiné à commander les interrupteurs (I_{A1}, I_{A2}...I_{F1}, I_{F2}) de manière que, sur un certain intervalle de temps de charge, exactement trois premiers interrupteurs (I_{A1}...I_{F1}) soient fermés en même temps dans au moins 90% des configurations successives.

2. Chargeur de batterie selon la revendication 1, dans lequel l'intervalle de temps de charge vaut au moins une période du réseau électrique.

3. Chargeur de batterie selon la revendication 1 ou 2, dans lequel les interrupteurs (I_{A1}, I_{A2}...I_{F1}, I_{F2}) sont commandés de manière que, sur l'intervalle de temps de charge, exactement trois premiers interrupteurs (I_{A1}...I_{F1}) soient fermés en même temps dans toutes les configurations successives.

4. Chargeur de batterie selon l'une quelconque des revendications 1 à 3, dans lequel le dispositif de commande (120) est destiné à faire suivre chaque configuration d'interrupteurs dans laquelle les premiers interrupteurs de deux bras de commutation d'une même inductance (104, 106, 108) sont l'un fermé l'autre ouvert, par une configuration d'interrupteurs dans laquelle ces premiers interrupteurs sont dans les états opposés, les autres premiers interrupteurs restant dans le même état dans les deux configurations.

5. Chargeur de batterie selon l'une quelconque des revendications 1 à 4, dans lequel chaque interrupteur comporte un transistor et une diode montés en parallèle l'un de l'autre, la diode étant montée en inverse du transistor.

6. Installation électrique (100) comportant :
- un chargeur de batterie selon l'une quelconque des revendications 1 à 5,
- une batterie (102) connectée aux bornes de sortie (BS1, BS2) du chargeur de batterie,
- un moteur électrique comportant trois inductances (104, 106, 108) et un rotor destiné à être entraîné en rotation par un champ magnétique généré par le moteur électrique,
- un onduleur connectant la batterie (102) au moteur électrique, l'onduleur comportant six bras de commutation (B_{A}...B_{F}) destinés à connecter respectivement les six extrémités des inductances (104, 106, 108) du moteur électrique sélectivement à la première borne de sortie (BS1) et à la deuxième borne de sortie (BS2).

7. Installation électrique (100) selon la revendication 6, dans laquelle les inductances du moteur électrique et les inductances du chargeur de batterie sont les mêmes.

8. Installation électrique (100) selon la revendication 6 ou 7, dans laquelle les bras de commutation de l'onduleur et du chargeur de batterie sont les mêmes.

9. Installation électrique selon l'une quelconque des revendications 6 à 8, comportant en outre un convertisseur continu-continu entre l'onduleur et la batterie.

10. Véhicule automobile comportant une installation électrique (100) selon l'une quelconque des revendications 6 à 9, le moteur électrique étant destiné à entraîner des roues du véhicule automobile.

## Patentansprüche

1. Batterieladegerät, aufweisend:
- drei Induktoren (104, 106, 108), die jeweils zwei Enden aufweisen,
- drei Eingangsklemmen (BE1, BE2, BE3), die an einem Übergangspunkt jeweils der drei Induktoren (104, 106, 108) angeschlossen und bestimmt sind, jeweils an drei Phasen (P_{A}, P_{B}, Pc) eines Dreiphasennetzes angeschlossen zu sein, damit an ihnen jeweils drei Phasenspannungen (V_{A}, V_{B}, Vc) anliegen,
- zwei Ausgangsklemmen (BS1, BS2), zwischen denen eine Batterie (102) bestimmt ist angeschlossen zu sein, um einen Ladestrom (i_{B}) zu empfangen,
- für jedes der Induktorenden einen Schaltarm (B_{A}...B_{F}), der aufweist:
- einen ersten Schalter (I_{A1}...I_{F1}), der bestimmt ist, das Induktorende selektiv an/von die/der erste/n Ausgangsklemme (BS1) anzuschließen/zu lösen,
- einen zweiten Schalter (I_{A2}...I_{F2}), der bestimmt ist, das Induktorende selektiv an/von die/der zweite/n Ausgangsklemme (BS2) anzuschließen/zu lösen,
- eine Steuervorrichtung (120) der Schalter (I_{A1}, I_{A2}...I_{F1}, I_{F2}), um sie in aufeinanderfolgende Konfigurationen zu versetzen,
**dadurch gekennzeichnet, dass** die Steuervorrichtung (120) bestimmt ist, die Schalter (I_{A1}, I_{A2...}I_{F1}, I_{F2}) derart zu steuern, dass über ein bestimmtes Ladezeitintervall genau drei erste Schalter (I_{A1}...I_{F1}) in mindestens 90 % der aufeinanderfolgenden Konfigurationen gleichzeitig geschlossen sind.

2. Batterieladegerät nach Anspruch 1, wobei das Ladezeitintervall mindestens einer Periode des Stromnetzes entspricht.

3. Batterieladegerät nach Anspruch 1 oder 2, wobei die Schalter (I_{A1}, I_{A2...}I_{F1}, I_{F2}) derart gesteuert werden, dass über das Ladezeitintervall genau drei erste Schalter (I_{A1}...I_{F1}) in allen aufeinanderfolgenden Konfigurationen gleichzeitig geschlossen sind.

4. Batterieladegerät nach einem der Ansprüche 1 bis 3, wobei die Steuervorrichtung (120) bestimmt ist, dass jeder Schalterkonfiguration, in der die ersten Schalter von zwei Schaltarmen desselben Induktors (104, 106, 108) jeweils der eine geschlossen und der andere geöffnet sind, eine Schalterkonfiguration folgt, in der diese ersten Schalter in den entgegengesetzten Zuständen sind, wobei die anderen ersten Schalter im gleichen Zustand in den zwei Konfigurationen verbleiben.

5. Batterieladegerät nach einem der Ansprüche 1 bis 4, wobei jeder Schalter einen Transistor und eine Diode aufweist, die parallel zueinander montiert sind, wobei die Diode umgekehrt zum Transistor montiert ist.

6. Elektrische Anlage (100), aufweisend:
- ein Batterieladegerät nach einem der Ansprüche 1 bis 5,
- eine Batterie (102), die an die Ausgangsklemmen (BS1, BS2) des Batterieladegeräts angeschlossen ist,
- ein Elektromotor, der drei Induktoren (104, 106, 108) und einen Rotor aufweist, der bestimmt ist, von einem Magnetfeld, das von dem Elektromotor erzeugt wird, rotierend angetrieben zu werden,
- ein Wechselrichter, der die Batterie (102) mit dem Elektromotor verbindet, wobei der Wechselrichter sechs Schaltarme (B_{A}...B_{F}) aufweist, die bestimmt sind, jeweils die sechs Enden der Induktoren (104, 106, 108) des Elektromotors selektiv mit der ersten Ausgangsklemme (BS1) und der zweiten Ausgangsklemme (BS2) zu verbinden.

7. Elektrische Anlage (100) nach Anspruch 6, wobei die Induktoren des Elektromotors und die Induktoren des Batterieladegeräts dieselben sind.

8. Elektrische Anlage (100) nach Anspruch 6 oder 7, wobei die Schaltarme des Wechselrichters und des Batterieladegeräts dieselben sind.

9. Elektrische Anlage nach einem der Ansprüche 6 bis 8, aufweisend ferner einen Gleichstrom-Gleichstrom-Umrichter zwischen dem Wechselrichter und der Batterie.

10. Kraftfahrzeug, das eine elektrische Anlage (100) nach einem der Ansprüche 6 bis 9 aufweist, wobei der Elektromotor bestimmt ist, die Räder des Kraftfahrzeugs anzutreiben.

## Claims

1. Battery charger, comprising:
- three inductances (104, 106, 108) each comprising two ends,
- three input terminals (BE1, BE2, BE3) connected to an intermediate point respectively of the three inductances (104, 106, 108) and intended to be respectively connected to three phases (P_{A}, P_{B}, P_{C}) of a three-phase network to have respectively three phase voltages (V_{A}, V_{B}, V_{C}) applied,
- two output terminals (BS1, BS2) between which a battery (102) is intended to be connected to receive a charge current (i_{B}),
- for each of the inductance ends, a switch arm (B_{A}...B_{F}) comprising:
- a first switch (I_{A1}...I_{F1}) intended to selectively connect/disconnect the inductance end to/from the first output terminal (BS1),
- a second switch (I_{A2}...I_{F2}) intended to selectively connect/disconnect the inductance end to/from the second output terminal (BS2),
- a device for controlling (120) the switches (I_{A1}, I_{A2}...I_{F1}, I_{F2}) to make them go to successive configurations,
**characterised in that** the control device (120) is intended to control the switches (I_{A1}, I_{A2}...I_{F1}, I_{F2}) in such a way that, over a certain charge time interval, exactly three first switches (I_{A1}...I_{F1}) are closed at the same time in at least 90% of successive configurations.

2. Battery charger according to claim 1, wherein the charge time interval is equal to at least a period of the electrical network.

3. Battery charger according to claim 1 or 2, wherein the switches (I_{A1}, I_{A2}...I_{F1}, I_{F2}) are controlled in such a way that, over the charge time interval, exactly three first switches (I_{A1}...I_{F1}) are closed at the same time in all the successive configurations.

4. Battery charger according to any one of claims 1 to 3, wherein the control device (120) is intended to follow each configuration of switches in which the first switches of two switch arms of a same inductance (104, 106, 108) are one closed the other open, by a configuration of switches in which these first switches are in opposite states, the other first switches remaining in the same state in both configurations.

5. Battery charger according to any one of claims 1 to 4, wherein each switch comprises a transistor and a diode mounted in parallel with each other, the diode being reverse mounted to the transistor.

6. Electrical installation (100) comprising:
- a battery charger according to any one of claims 1 to 5,
- a battery (102) connected to the output terminals (BS1, BS2) of the battery charger,
- an electric engine comprising three inductances (104, 106, 108) and a rotor intended to be rotationally driven by a magnetic field generated by the electric engine,
- an inverter connecting the battery (102) to the electric engine, the inverter comprising six switch arms (B_{A}...B_{F}) intended to connect respectively the six ends of the inductances (104, 106, 108) of the electric engine selectively to the first output terminal (BS1) and to the second output terminal (BS2).

7. Electrical installation (100) according to claim 6, wherein the inductances of the electric engine and the inductances of the battery charger are the same.

8. Electrical installation (100) according to claim 6 or 7, wherein the switch arms of the inverter and the battery charger are the same.

9. Electrical installation according to any one of claims 6 to 8, further comprising a DC-DC converter between the inverter and the battery.

10. Automobile vehicle comprising an electrical installation (100) according to any one of claims 6 to 9, the electric engine being intended to drive wheels of the automobile vehicle.
